# EUROPÄISCHE PATENTSCHRIFT

(11) **EP 0 901 591 B1**
(45) Veröffentlichungstag und Bekanntmachung des Hinweises auf die Patenterteilung: **17.10.2001**
(21) Anmeldenummer: 97927115.2
(22) Anmeldetag: 03.06.1997
(51) Int. Cl.: F16K 31/40

(54) **MAGNETVENTIL**
MAGNETIC VALVE
ELECTROVANNE

(30) Priorität: 05.06.1996 DE 19622626
(43) Veröffentlichungstag der Anmeldung: 17.03.1999
(73) Patentinhaber: INTERELEKTRIK GESMBH & CO. KG, A-9500 Villach (AT)
(72) Erfinder: ORTNER, Johann, A-9500 Villach (AT); SEEMANN, Johann, A-9523 Villach-Landskron (AT)
(74) Vertreter: Bauer, Robert, Dipl.-Ing.
(86) Internationale Anmeldenummer: EP9702872
(87) Internationale Veröffentlichungsnummer: WO9746821

(56) Entgegenhaltungen:
- EP-A- 0 135 474
- DE-C- 976 465
- FR-A- 1 514 837
- US-A- 2 870 986
- PATENT ABSTRACTS OF JAPAN vol. 014, no. 331 (M-0999), 17.Juli 1990 & JP 02 113187 A (TOTO), 25.April 1990,
- PATENT ABSTRACTS OF JAPAN vol. 017, no. 618 (M-1510), 15.November 1993 & JP 05 187575 A (KANBAYASHI SEISAKUSHO:KK), 27.Juli 1993,

## Beschreibung

Die Erfindung betrifft ein Magnetventil gemäß Gattungsbegriff des Patentanspruchs 1.

Bei Magnetventilen, wie sie beispielsweise zur Steuerung des Wasserzuflusses von Wasch- und Spülmaschinen Verwendung finden, insbesondere aber bei solchen mit Servoventilfunktion, ist zu beobachten, daß infolge von Kavitation beim plötzlichen Schließen des Ventils hammerschlagartige Geräusche auftreten. Zudem ist auf der Einlaßseite ein stoßartiger Druckanstieg zu verzeichnen. Gegen beide Arten von Druckstößen hat man sich bereits dadurch zu schützen versucht, daß man als Zu- und Ableitung elastische Schläuche verwendete, doch werden die betreffenden Magnetventile aus Sicherheitsgründen neuerdings unmittelbar am Wasserhahn eingesetzt und/oder auch mit dem zu speisenden System über möglichst kurze, verhältnismäßig unelastische Leitungen verbunden. Aus diesem Grunde hat man auch bereits vorgeschlagen (EP-A-0 135 474), innerhalb des Magnetventils ein- wie auslaßseitig gegen Federkraft veränderbare Druckausgleichsvolumina zu schaffen. Derartige Lösungsversuche sind jedoch aufwendig und teuer. Des weiteren hat man bei eigenmediumgesteuerten Magnetventilen versucht, zu- wie abströmseitige Druckstöße dadurch zu verringern, daß man dem Überströmkanal des betreffenden Servoventilmechanismus einen sehr kleinen Querschnitt gab, der nur ein verzögertes Schließen des Hauptventils ermöglicht. Dabei besteht jedoch die Gefahr, daß sich dieser Kanal durch Ablagerungen und/oder mit der zu steuernden Flüssigkeit mitgeführte Schmutzpartikel verlegt und das Ventil dann nicht mehr zu schließen vermag.

Des weiteren hat man gemäß DE-PS 976 465 bei einem eigenmediumgesteuerten Magnetventil gemäß Gattungsbegriff mit senkrecht durch das Hauptventilglied hindurchtretendem Überströmkanal eine zunehmende Querschnittsverringerung desselben mit der Schließbewegung dadurch erreicht, daß in den Überströmkanal ein gehäusefester konischer Stift hineinragt. Damit aber läßt sich nur eine recht allmähliche Querschnittsverringerung eines ohnedies noch verhältnismäßig engen. Überströmkanals erreichen, so daß das Ventil nur zögerlich schließt. Zudem besteht die Gefahr, daß etwa Kalkablagerungen an dem Stift die Querschnittsverhältnisse unkontrollierbar machen und/oder zu Abrieb an der Wandung des Überströmkanals führen.

Die FR-PS 1 514 837 gibt ein gleichfalls gattungsgleiches eigenmediumgesteuertes Magnetventil mit einer gummielastischen Membran an, die zum einen auf dem Hauptventilsitz zur Auflage kommt, zum anderen sich radial außerhalb des Hauptventilsitzes mit einer ringförmigen Falte gegenüber dem von der Einlaßseite her auf sie einwirkenden Überdruck unter Vermittlung eines ringförmigen Gliedes an einer starren Tellerfläche des Hauptventilgliedes abzustützen vermag. Das ringförmige Glied weist beidseitig einen Kranz feiner radialer Rillen auf, über die der Druckausgleich zwischen beiden Seiten des Hauptventilgliedes erfolgt. Obgleich der Durchtrittsquerschnitt des so geschaffenen Strömungspfades sich mit dem gegen Ende der Schließbewegung zunehmenden Andruck der Membran verringern mag, kann er nicht gegen 0 gehen, so daß der Abschluß der Schließbewegung dennoch verhältnismäßig schlagartig erfolgt.

Des weiteren gibt die US-PS 2 870 986 ein prinzipiell ähnlich aufgebautes Magnetventil an, bei dem ein Überströmkanal im Haupftventilglied mit zunehmendem Überdruck von der Eintrittsseite des Ventils weitgehend unabhängig von der jeweiligen Stellung des Hauptventilgliedes in zunehmendem Maße dadurch eingeschnürt wird, daß die Membran in eine Ringnut eines tellerförmigen Abstützgliedes gedrückt wird. Mit dem so geschaffenen "Verstärkungsglied" soll der Durchsatz des Ventils in bezug auf den anstehenden Druck stabilisiert werden.

Hier wie dort besteht wiederum die Gefahr, daß sich der Durchtrittsquerschnitt des betreffenden Strömungspfades im Laufe der Zeit durch Ablagerungen verringert.

Von diesem Stand der Technik ausgehend liegt der Erfindung die Aufgabe zugrunde, bei einem eigenmediumgesteuerten Magnetventil dafür Sorge zu tragen, daß der Schließvorgang unter Vermeidung zu- wie abströmseitiger Druckstöße rasch und mit langfristig gleichbleibender Präzision erfolgt.

Die Querschnittsverminderung des Überströmkanals vermittels des Auflagedrucks des Hauptventilgliedes auf seinem Ventilsitz gewährleistet, daß der Durchtrittsquerschnitt des Überströmkanals erst in der allerletzten Phase der Schließbewegung, dann aber um so nachdrücklicher verringert wird. Dazu ist anzumerken, daß der Durchsatz des Ventils sich im Laufe der Schließbewegung mit zunehmendem Gradienten ändert, somit die Charakteristik der Endphase der Schließbewegung von entscheidender Bedeutung ist. Die dennoch auch vom Eingangsdruck der zu steuernden Flüssigkeit abhängige Querschnittsverminderung des Überströmkanals durch Quetschen ergibt zudem einen Regelvorgang, durch den die Schließgeschwindigkeit des Ventils in der kritischen Endphase weitgehend druckunabhängig ist. Schließlich aber werden durch die mechanische Einwirkung des Auflagedruckes des Hauptventilgliedes auf seinem Ventilsitz auch Ablagerungen schon im Entstehen beseitigt.

Auf besonders einfache Weise kann der Drosselkanal in der bei derartigen Ventilen üblicherweise vorhandenen elastischen Membran des Hauptventilgliedes ausgebildet sein in einer Art, daß er durch die Auflage der Membran auf dem zugehörigen Ventilsitz zusammenquetschbar ist. Dazu noch können Maßnahmen hinzutreten, um den betreffenden Drosselkanal in der Anfangsphase des Schließvorganges zu umgehen und damit den Schließvorgang zu beschleunigen.

Nachfolgend wird ein entsprechendes Ausführungsbeispiel anhand der Figuren im einzelnen beschrieben. Von diesen zeigt
- FIG. 1: eine perspektivische Darstellung des gesamten Magnetventils im Schnitt,
- FIG. 2 und 3: verschiedene perspektifische Darstellungen der Membran des betreffenden Hauptventils,
- FIG. 4 und 5: verschiedene perspektivische Darstellungen eines in Verbindung mit der Membran aus den Figuren 2 und 3 zur Anwendung kommenden Membraneinsatzes und
- FIG. 6, 7 und 8: jeweils einen Detailschnitt durch den Hauptventilbereich des betreffenden Magnetventils in verschiedenen Arbeitsphasen, nämlich FIG. 6 bei geöffnetem Hauptventil, FIG. 7 gegen Ende des Schließvorganges des Hauptventils und FIG. 8 bei geschlossenem Hauptventil.

Das gezeigte Magnetventil 2 weist einen Ventilkörper 4 mit einem seitlich darin einmündenden Einlaßstutzen 6 und einem nach unten zu, d.h. rechtwinklig zu dem Einlaßstutzen 6 verlaufenden Auslaßstutzen 8 auf. Prinzipiell könnte der außenliegende Abschnitt des Auslaßstutzens 8 auch fluchtend mit dem Einlaßstutzen 6 angeordnet sein.

Das innenseitige Ende des Auslaßstutzens 8 bildet den ringförmigen Ventilsitz 10 des Hauptventils 12 ("Hauptventilsitz"). Oberhalb des Ventilsitzes 10 und koaxial mit diesem ist in dem Ventilkörper 4 eine nach oben hin offene, kreiszylindrische Aussparung 14 vorgesehen, die unterseitig, etwa in Höhe des Ventilsitzes 10, mit einer Schulter 16 endet. Die Schulter 16 bildet die Auflage eines peripheren Bundes 18 einer gummielastischen Membran 20 des Hauptventils 12, der dichtend von einem zylindrischen Flansch 22 eines Deckels 24 auf die Schulter 16 gepreßt wird. Der Deckel 24 trägt ein aufrechtstehendes zentrales Kernführungsrohr 26, das von der hermetisch gekapselten Magnetwicklung 28 eines elektromagnetischen Schaltsystems 30 umgeben ist. Die Magnetwicklung 28 ist in einer dazu passenden Aussparung 32 des Deckels 24 durch Pass- und Rastmittel 34 bzw. 36 gehalten.

In dem Kernführungsrohr 26 ist gleitfähig ein zylindrischer Tauchkern 38 des Schaltsystems 30 gelagert, der oberseitig, von dem dort geschlossenen Ende 40 des Kernführungsrohres 26 her der Kraft einer Wendeldruckfeder 42 unterworfen ist. Das verjüngte untere Ende des Tauchkerns 38 trägt eine gummielastische Kappe 44, die das Ventilglied eines Pilotventils 46 für die Betätigung des Hauptventils 12 bildet. Ein vergleichsweise starrer Membraneinsatz 48 bildet zusammen mit der Membran 20 das Ventilglied 50 des Hauptventils ("Hauptventilglied").

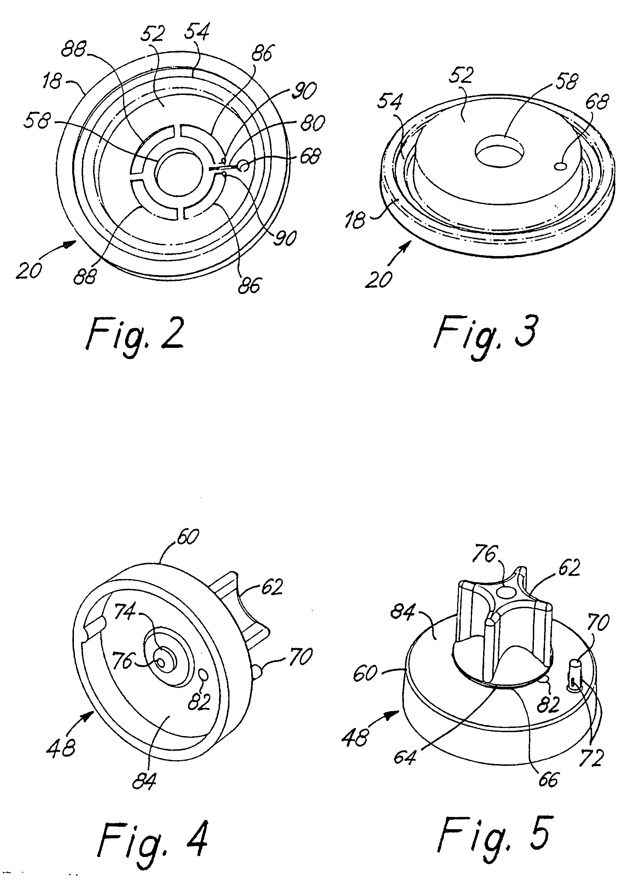

Wie die Figuren 2 - 5 genauer zeigen, besitzt die Membran 20 mit einem flachen Boden 52 und einer diesen umgebenden dünnwandigen Walkzone 54 einen zentralen schalenförmigen Teil, an den sich außen der Bund 18 anschließt. Der Boden 52 enthält eine zentrale Öffnung 58. Der Membraneinsatz 48 besteht im wesentlichen aus einem schalenförmigen Teil 60 und einer damit koaxialen sogenannten Krone 62 in Gestalt eines etwa kreuzförmig profilierten Zapfens, der an den schalenförmigen Teil 60 über einen flachen, eine Ringnut 64 aufweisenden Sockelabschnitt 66 anschließt. Bei montiertem Hauptventilglied 50 kommt der schalenförmige Teil 60 innerhalb des schalenförmigen Teils aus Boden 52 und Walkzone 54 der Membran 20 zu liegen, wobei der die zentrale Öffnung 58 der Membran umgebende Rand von der Ringnut 64 aufgenommen wird.

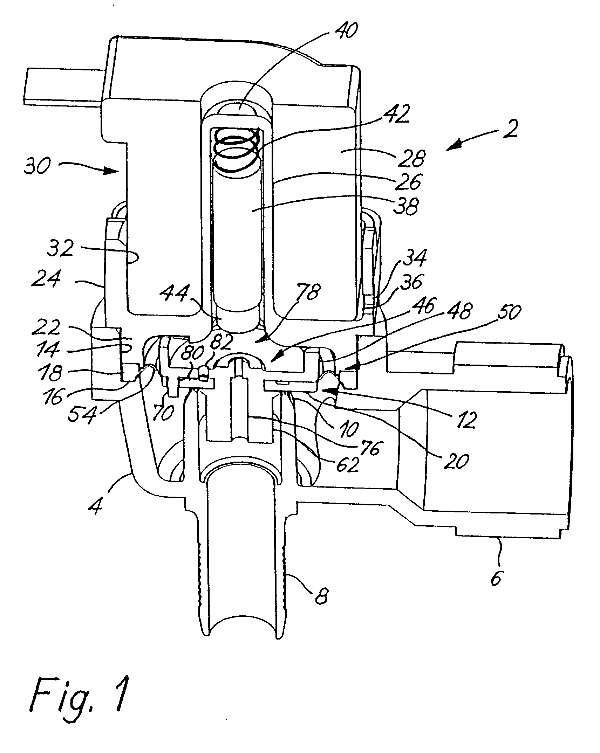

Exzentrisch zu der zentralen Öffnung 58, auf einem Radius kleiner als demjenigen des Ventilsitzes 10 (FIG. 1), weist der Boden 52 der Membran 20 eine Durchbohrung 68 und der Membraneinsatz 48 einen durch die Durchbohrung 68 lose hindurchreichenden Stift 70 auf, der gegenüber der Durchbohrung 68 durch vier kreuzweise an ihm angeordnete Rippen 72 zentriert ist. Des weiteren befindet sich in dem Membraneinsatz 48 eine von einer zentralen Warze 74 im Inneren seines schalenförmigen Teils 60 ausgehende, durch die Krone 62 hindurchreichende Durchbohrung 76. Mit der Durchbohrung 76 bildet die Warze 74 den Ventilsitz des Pilotventils 46.

Insoweit sind die Teile des Magnetventils 2 herkömmlich. Ihre Funktionsweise ist folgende:

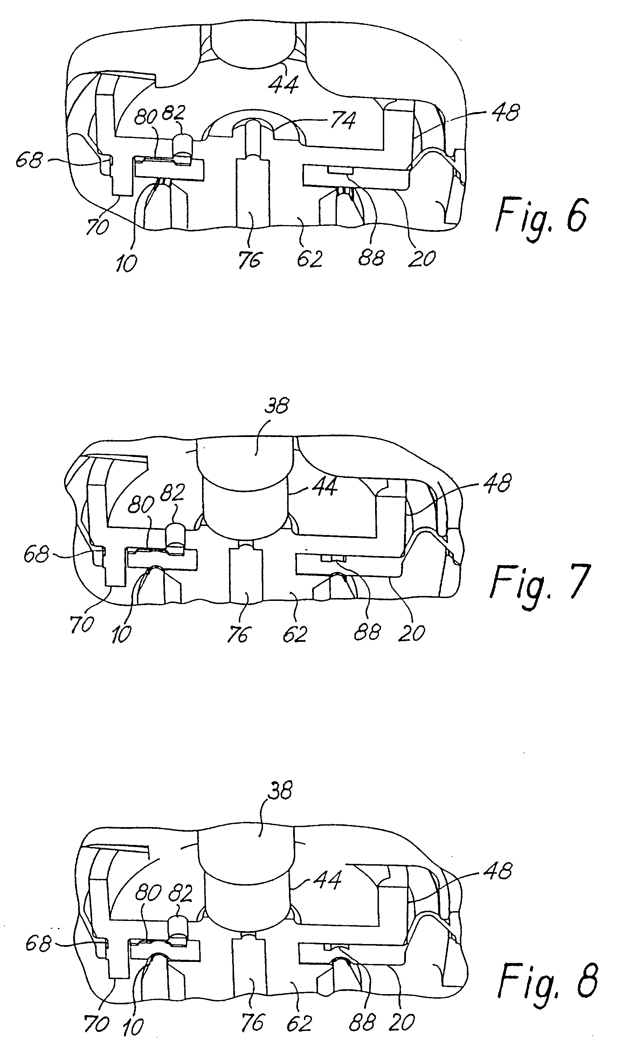

Ist die Magnetwicklung 28 erregt und infolgedessen der Tauchkern 38 entgegen der Kraft der Feder 42 in die in FIG. 6 gezeichnete Stellung angezogen, so ist damit das Pilotventil 46 geöffnet. Die Möglichkeit für in der oberhalb der Membran 20 befindlichen sogenannten Pilotventilkammer 78 vorhandene Flüssigkeit, durch die Durchbohrung 76 in den Auslaßstutzen 8 abzuströmen, der fehlende Auflagedruck seitens des federbelasteten Tauchkerns 38 und die Eigenelastizität der Membran 20 bewirken, daß die Membran eine von dem Ventilsitz 10 abgehobene Stellung einnimmt. D.h. das Hauptventil 12 ist geöffnet.

Wird nun durch Erlöschen der Erregung der Magnetwicklung 28 der Tauchkern 38 freigegeben, so verschließt seine gummielastische Kappe 44 die Durchbohrung 76. Damit ist das Pilotventil 46 geschlossen. Gleichzeitig sucht der federbelastete Tauchkern 38 die Membran 20 vermittels des Membraneinsatzes 48 nach unten, gegen den Ventilsitz 10, zu drücken. Dies wird zunehmend unterstützt durch den sich nun durch die Durchbohrung 68 der Membran hindurch von der Einlaßseite des Magnetventils 2 her in der Pilotventilkammer 78 aufbauenden Druck. Dieser hätte im Normalfall zur Folge, daß das Hauptventilglied 50 schlagartig auf dem Ventilsitz 10 auftrifft und damit das Hauptventil 12 ebenso schlagartig schließt. Dagegen suchte man sich bislang, wie gesagt, zuweilen bereits dadurch zu helfen, daß der Durchtrittsquerschnitt eines der Duchbohrung 68 der Membran 20 vergleichbaren Überströmkanals sehr klein bemessen wurde, was aber die Gefahr eines unbeabsichtigten Verlegens desselben sowie eine unerwünschte Hinauszögerung des Schließvorganges zur Folge hatte.

Im vorliegenden Fall kann nun aber die Durchbohrung 68 so reichlich bemessen sein, daß eine Verlegung kaum zu befürchten ist. Dafür ist gegen ein zu plötzliches Schließen des Hauptventils 12 auf folgende Weise Sorge getragen:

Im Boden 52 der Membran 20 befindet sich, ausgehend von der Durchbohrung 68, ein radialer Drosselkanal 80, der zu einer radial nach innen versetzten Durchbohrung 82 im Boden 84 des schalenförmigen Teils 60 des Membraneinsatzes 48 führt. Infolgedessen ist - solange die Membran 20 am Boden des schalenförmigen Teils 60 anliegt - durch die Durchbohrung 68 hindurchtretende Flüssigkeit gezwungen, um in die Pilotventilkammer 78 zu gelangen, den Drosselkanal 80 zu passieren.

Der Drosselkanal 80 ist zu dem Boden 84 des Membraneinsatzes 48 hin offen. Dabei ist seine Wandung über den Boden zweier beidseitig daran anschließender, ringsegmentförmiger flacher Aussparungen 86 im Boden 52 der Membran 20 erhaben, so daß er durch Auflagedruck seitens des Membraneinsatzes 48 leicht verformbar ist in einer Weise, daß sich sein lichter Querschnitt bis auf null reduzieren läßt. Aus Symmetriegründen sind die beiden Aussparungen 86 zur gegenüberliegenden Seite hin durch zwei ebensolche ringsegmentförmige Aussparungen 88 ergänzt, um mit diesen zusammen eine kranzförmige Anordnung zu bilden.

Zwei Abstützglieder in Gestalt von beiderseits des Drosselkanals 80 vom Boden der ringsegmentförmigen Aussparungen 86 aus bis über die übrige Bodenfläche der Membran 20 emporragenden, elastisch verformbaren Stiften 90 sind bestrebt, den Boden 52 der Membran vom Boden 84 des Membraneinsatzes 48 entfernt zu halten. Sie sind jedoch weich genug, um einem verstärkten Druck seitens des Membraneinsatzes nachzugeben und so den Boden 84 des Membraneinsatzes auf dem Boden 52 der Membran zur Auflage kommen zu lassen, so daß fortan Flüssigkeit von der Durchbohrung 68 der Membran her zu der Durchbohrung 82 des Membraneinsatzes nur noch durch den Drosselkanal 80 hindurch gelangen kann. Hierdurch tritt mit zunehmendem Druckaufbau in der Pilotventilkammer 78 bereits eine erste Reduzierung des Zuflusses zu der Pilotventilkammer ein.

Eine weitere Reduzierung bis auf null erfolgt schließlich dadurch, daß mit weiter zunehmendem Druck von Seiten der Pilotventilkammer 78 der sich über die Kante des Ventilsitzes 10 hinweg erstreckende Drosselkanal 80 zusammengequetscht wird. Auf diese Weise wird der Zufluß zu der Pilotventilkammer 78 zunehmend erschwert, so daß das Hauptventil 12 in der Endphase sanft schließt. Da diese Zuflußerschwernis von der Größe des sich in der Pilotventilkammer 78 aufbauenden Druckes abhängig ist, erfolgt die Schließbewegung in der Endphase weitgehend druckunabhängig.

Bemerkenswert ist, daß das vorausgehend beispielhaft beschriebene Magnetventil 2 gegenüber entsprechenden herkömmlichen Magnetventilen ohne besondere Maßnahmen zur Druckstoßminderung lediglich des Austauschs zweier Teile bedarf, nämlich der Membran und des Membraneinsatzes. Auf diese Weise ist es auch denkbar, herkömmliche solche Magnetventile auf einfache Weise entsprechend umzurüsten.

## Patentansprüche

1. Eigenmediumgesteuertes, durch ein elektromagnetisch gesteuertes Pilotventil (46) betätigbares Magnetventil (2) zur Steuerung von Flüssigkeiten, welches ein Hauptventilglied (50) in Gestalt eines Differentialkolbens und Mittel zur Unterdrückung von Druckstößen beim Schließen des Hauptventil (12) unter Einbeziehung eines einen begrenzten Durchtrittsquerschnitt aufweisenden Überströmkanals (68, 80, 82) zwischen beiden Seiten des Hauptventilgliedes (50) aufweist, dessen Querschnitt sich in der letzten Phase der Schließbewegung in Abhängigkeit von der Schließbewegung zunehmend verringert, **dadurch *gekennzeichnet,* daß** der Überströmkanal (68, 80, 82) zumindest teilweise aus einem eine elastische Wandung aufweisenden und durch Quetschung infolge zunehmenden Auflagedrucks des Hauptventilgliedes (50) auf seinem Ventilsitz (10) in der letzten Phase der Schließbewegung zunehmend einschnürbaren Drosselkanal (80) besteht.

2. Magnetventil (2) nach Anspruch 1, **dadurch *gekennzeichnet,* daß** der Drosselkanal (80) im Hauptventilglied (50) ausgebildet ist.

3. Magnetventil (2) nach Anspruch 2, **dadurch *gekennzeichnet,* daß** der Drosselkanal (80) in einer gummielastischen Membran (20) des Hauptventilgliedes (50) ausgebildet ist.

4. Magnetventil (2) nach Anspruch 2 oder 3, **dadurch *gekennzeichnet,* daß** der Drosselkanal (80) durch Auflage auf dem Hauptventilsitz (10) zusammenquetschbar ist.

5. Magnetventil (2) nach den Ansprüchen 3 und 4, **dadurch *gekennzeichnet*, daß** der Drosselkanal (80) zwischen zwei auf unterschiedlichen Radien liegenden Durchbohrungen (68, 82) der Membran (20) bzw. eines Membraneinsatzes (48) verläuft.

6. Magnetventil (2) nach Anspruch 5, **dadurch *gekennzeichnet,* daß** die Wandung des Drosselkanals (80) über benachbarte Flächenabschnitte der Membran (20) erhaben ausgebildet ist.

7. Magnetventil (2) nach Anspruch 6, **dadurch *gekennzeichnet,* daß** die benachbarten Flächenabschnitte vom Boden flacher Aussparungen (86) der Membran (20) gebildet werden.

8. Magnetventil (2) nach Anspruch 7, **dadurch *gekennzeichnet,* daß** die betreffenden Aussparungen (86), ggf. im Verein mit weiteren solchen Aussparungen (88), ring- oder kranzförmig um das Zentrum der Membran (20) herum angeordnet sind.

9. Magnetventil (2) nach einem der Ansprüche 5 - 8, **dadurch *gekennzeichnet,* daß** der Drosselkanal (80) zur Seite des Membraneinsatzes (48) hin offen ist.

10. Magnetventil (2) nach einem der Ansprüche 5 - 9, **dadurch *gekennzeichnet,* daß** sich neben dem Drosselkanal (80) mindestens ein flachdrückbares elastisches Abstützglied (90) befindet, das bestrebt ist, den betreffenden Membranbereich von dem Membraneinsatz (48) entfernt zu halten.

## Claims

1. Own-medium-controlled solenoid valve (2) for the control of liquids, which is actuable by means of an electromagnetically controlled pilot valve (46) and which has a main valve member (50) in the form of a differential piston and means for the suppression of pressure surges during the closing of the main valve (12), including an overflow duct (68, 80, 82) having a limited passage cross section, between the two sides of the main valve member (50), the cross section of which is reduced increasingly in the last phase of the closing movement as a function of the closing movement, **characterized in that** the overflow duct (68, 80, 82) consists at least partially of a throttle duct (80) which has an elastic wall and which is capable of being increasingly contracted in the last phase of the closing movement by squeezing as a result of an increasing bearing pressure of the main valve member (50) on its valve seat (10).

2. Solenoid valve (2) according to Claim 1, **characterized in that** the throttle duct (80) is formed in the main valve member (50).

3. Solenoid valve (2) according to Claim 2, **characterized in that** the throttle duct (80) is formed in an elastomeric diaphragm (20) of the main valve member (50).

4. Solenoid valve (2) according to Claim 2 or 3, **characterized in that** the throttle duct (80) is capable of being squeezed together as a result of bearing contact on the main valve seat (10).

5. Solenoid valve (2) according to Claims 3 and 4, **characterized in that** the throttle duct (80) runs between two through-bores (68, 82) of the diaphragm (20) or of a diaphragm insert (48) which lie on different radii.

6. Solenoid valve (2) according to Claim 5, **characterized in that** the wall of the throttle duct (80) is formed so as to be raised via adjacent surface portions of the diaphragm (20).

7. Solenoid valve (2) according to Claim 6, **characterized in that** the adjacent surface portions are formed by the bottom of shallow recesses (86) of the diaphragm (20).

8. Solenoid valve (2) according to Claim 7, **characterized in that** the respective recesses (86), if appropriate in conjunction with further such recesses (88), are arranged in the form of a ring or of a crown about the centre of the diaphragm (20).

9. Solenoid valve (2) according to Claims 5 to 8, **characterized in that** the throttle duct (80) is open towards the side of the diaphragm insert (48).

10. Solenoid valve (2) according to one of Claims 5 to 9, **characterized in that** next to the throttle duct (80) is located at least one elastic supporting member (90) which is capable of being pressed flat and which endeavours to keep the respective diaphragm region away from the diaphragm insert (48).

## Revendications

1. Electrovanne (2) commandée par son propre fluide, pouvant être actionnée par une soupape pilote (46) à commande électromagnétique, destinée à la commande de liquides, qui comprend un élément de soupape principal (50) présentant la forme d'un piston différentiel et des moyens destinés à supprimer les coups de bélier au moment de la fermeture de la soupape principale (12) en faisant intervenir un canal de décharge (68, 80, 82) qui possède une section de passage limitée entre les deux côtés de l'élément de soupape principal (50), dont la section se réduit dans la dernière phase du mouvement de fermeture en fonction du mouvement de fermeture, **caractérisée en ce que** le canal de décharge (68, 80, 82) est constitué au moins en partie par un canal d'étranglement (80) qui présente une paroi élastique et qui peut se rétrécir progressivement dans la dernière phase du mouvement de fermeture, par écrasement sous l'effet d'une pression d'application croissante de l'élément de soupape principal (50) sur son siège (10).

2. Electrovanne (2) selon la revendication 1, **caractérisée en ce que** le canal d'étranglement (80) est formé dans l'élément de soupape principal (50).

3. Electrovanne (2) selon la revendication 2, **caractérisée en ce que** le canal d'étranglement (80) est formé dans une membrane (20) de l'élément de soupape principal (50) qui possède l'élasticité du caoutchouc.

4. Electrovanne (2) selon la revendication 2 ou 3, **caractérisée en ce que** le canal d'étranglement (80) peut être écrasé par application sur l'élément de soupape principal (10).

5. Electrovanne (2) selon les revendications 3 et 4, **caractérisée en ce que** le canal d'étranglement (80) s'étend entre deux perçages (68, 82) de la membrane (20) ou d'un insert de membrane (48) qui sont situés à des rayons différents.

6. Electrovanne (2) selon la revendication 5, **caractérisée en ce que** la paroi du canal d'étranglement (80) est en relief par rapport aux zones adjacentes de la membrane (20).

7. Electrovanne (2) selon la revendication 6, **caractérisée en ce que** les zones adjacentes de la surface sont formées par le fond d'évidements plats (86) de la membrane (20).

8. Electrovanne (2) selon la revendication 7, **caractérisée en ce que** les évidements (86) considérés, éventuellement avec d'autres évidements (88) du même genre, sont disposés en cercle ou en couronne autour du centre de la membrane (20).

9. Electrovanne (2) selon une des revendications 5 - 8, **caractérisée en ce que** le canal d'étranglement (80) s'ouvre vers le côté de l'insert de membrane (48).

10. , Electrovanne (2) selon une des revendications 5 - 9, **caractérisée en ce qu'**à côté du canal d'étranglement (80), se trouve au moins un élément d'appui élastique (90) pouvant s'aplatir qui tend à maintenir la région considérée de la membrane éloignée de l'insert de membrane (48).
